(19) Europäisches Patentamt

European Patent Office

Office européen des brevets

(11) **EP 0 637 571 B1**

(12) **EUROPÄISCHE PATENTSCHRIFT**

(45) Veröffentlichungstag und Bekanntmachung des Hinweises auf die Patenterteilung:
**13.11.1996 Patentblatt 1996/46**

(51) Int. Cl.$^6$: **C03C 8/14**, C04B 41/86, B29C 41/00, C03C 8/02

(21) Anmeldenummer: **94111461.3**

(22) Anmeldetag: **22.07.1994**

(54) **Keramisches Bauteil mit einem korrosionsbeständigen Überzug**

Ceramic element with a corrosion-resistant coating

Elément céramique avec un revêtement résistant à la corrosion

(84) Benannte Vertragsstaaten:
**DE ES FR GB IT PT**

(30) Priorität: **03.08.1993 DE 4326014**

(43) Veröffentlichungstag der Anmeldung:
**08.02.1995 Patentblatt 1995/06**

(73) Patentinhaber: **Hoechst CeramTec Aktiengesellschaft**
**95615 Marktredwitz (DE)**

(72) Erfinder:
• **Frankfurter, Günter**
**D-95615 Marktredwitz (DE)**
• **Pöhlmann, Heinz**
**D-95689 Fuchsmühl (DE)**

(74) Vertreter: **Hoffmann, Peter, Dipl.-Chem. et al**
**Hoechst AG**
**Patent- und Lizenzabteilung**
**Gebäude K 801**
**65926 Frankfurt am Main (DE)**

(56) Entgegenhaltungen:
EP-A- 0 584 977        GB-A- 1 107 943
US-A- 4 340 645

• DATABASE WPI Week 9339, Derwent Publications Ltd., London, GB; AN 93-309514 & JP-A-5 222 552
• CHEMICAL ABSTRACTS, vol. 109, no. 22, 28. November 1988, Columbus, Ohio, US; abstract no. 195923, Seite 364 ; & JP-A-63 186 780
• CHEMICAL ABSTRACTS, vol. 89, no. 6, 7. August 1978, Columbus, Ohio, US; abstract no. 47952, Seite 255 ; & JP-A-77 127 913

**Beschreibung**

Die Erfindung betrifft ein keramisches Bauteil, das an seiner äußeren Oberfläche einen korrosionsbeständigen keramischen Überzug trägt.

Bauteile der gattungsgemäßen Art werden als keramische Griffe für chemisch technische Zwecke oder für Kochgeschirr, vor allem aber als Tauchformen zur Herstellung dünnwandiger Erzeugnisse aus Gummi, z.B. von Handschuhen, durch Eintauchen der Tauchform in eine Latexflüssigkeit gebraucht. Insbesondere bei dem letztgenannten Verwendungszweck der Bauteile ist ihre Korrosionsbeständigkeit ein wichtiges Qualitätskriterium für ihre Eignung für den bestimmungsgemäßen Einsatzzweck. Die Oberfläche der Bauteile wird nämlich durch regelmäßig während des Fertigungsprozesses der Gummierzeugnisse notwendige Reinigungsprozesse stark strapaziert, durch die störende Ablagerungen auf der Tauchformoberfläche entfernt werden. Das Entfernen geschieht sowohl chemisch mit korrodierend wirkenden Reinigungsmitteln, wie Mineralsäuren, Laugen oder Oxidationsmitteln, die insbesondere bei erhöhter Temperatur, meist $\geqq 50\ °C$, zur Wirkung gebracht werden, als auch mechanisch z.B. durch bewegliche Bürsten. Dabei ist nicht nur direktes chemisches Auflösen der Oberfläche im Hinblick auf die Dauergebrauchseigenschaften der Tauchformen schädlich, auch eine Gefügelockerung durch Anlösen der bindenden Glasmatrix führt zu einem Abtrag und damit einer Veränderung der Oberflächenstruktur. Insbesondere bei einem grobkörnigen Gefüge besteht die Gefahr, daß schlecht eingebundene Partikel, wie Quarzkörper, nach einiger Zeit aus dem Bauteil herausfallen.

Die einfachste Methode zur Schaffung einer welligen Oberfläche ist die des Sandstrahlens eines unglasierten, fertig gebrannten Bauteils. Dieses Verfahren führt zu einer Vielzahl von Oberflächenbeschädigungen, im wesentlichen verursacht durch den erheblichen Materialbtrag. Eine Verbesserung der Korrosionsbeständigkeit von Porzellanbauteilen wird erreicht, wenn die silikatischen Bauteile roh oder nach einem Schrühbrand, der bei Temperaturen im Bereich von 800 bis 900 °C durchgeführt wird, sandgestrahlt und anschließend dichtgesintert werden.

Derartig hergestellte Handschuh-Tauchformen sind bekannt, aber wegen der oft komplizierten Geometrie der Bauteile sind die durch Sandstrahlen erzeugbaren Oberflächeneigenschaften sehr inhomogen und oft nicht exakt reproduzierbar.

Nach einem aus Handbuch der Keramik (1973) Verlag Schmidt GmbH, Freiburg, Gruppe I F1, S. 3 und 4, bekannten Verfahren werden Glasur- und/oder Porzellanmassemischungen per Luftstrahl auf die Tauchform aufgesprüht und die so gebildete Schicht aufgesintert. Alle bisher nach diesem Verfahren hergestellten Oberflächenstrukturen haben aber immer noch eine verbesserungswürdige Korrosionsbeständigkeit, die schlechter ist als diejenige, welche mit einem korrosionsbeständigen Sonderporzellan mit unbehandelter asfired-Oberfläche erreichbar ist.

Es bestand daher die Aufgabe, ein Bauteil mit einer dichten, porenarmen Beschichtung hoher Korrosionsbeständigkeit zu schaffen, das zusätzlich eine erhöhte Abrieb- und Verschleißfestigkeit besitzt.

Gelöst wird diese Aufgabe durch ein Bauteil der eingangs genannten Gattung, dessen Kennzeichenmerkmale darin zu sehen sind, daß der Überzug 40 bis 95 Gew.-% Porzellanglasur, 5 bis 30 Gew.-% hochsinteraktive calcinierte Tonerde, 0 bis 35 Gew.-% ungebranntes Sonderporzellan und 0 bis 25 Gew.-% gebranntes Sonderporzellan enthält.

Im Rahmen der vorliegenden Erfindung besteht die Porzellanglasur im allgemeinen aus 65 bis 85 Gew.-% $SiO_2$, 10 bis 20 Gew.-% $Al_2O_3$, 5 bis 15 Gew.-% CaO plus MgO in einem Mischungsverhältnis von 1:5 bis 5:1 und 0,1 bis 5 Gew.-% $K_2O$ plus $Na_2O$ in einem Mischungsverhältnis von 1:1 bis 10:1.

Die hochsinteraktive Tonerde besteht im allgemeinen aus calcinierter Tonerde mit einer spezifischen Oberfläche im Bereich von 8 bis 10 $m^2/g$ und einem Anteil von $\geqq$ 99,5 Gew.-% an $Al_2O_3$ oder aus anderen $Al_2O_3$-reichen Rohstoffen wie Aluminiumhydroxid, die im Brand eine ähnliche hohe Sinteraktivität entwickeln. Das Sonderporzellan besteht im allgemeinen in gebranntem und in ungebranntem Zustand aus 5 bis 50 Gew.-% $SiO_2$, 45 bis 90 Gew.-% $Al_2O_3$, 0,1 bis 6 Gew.-% CaO plus MgO in einem Mischungsverhältnis von 1:5 bis 5:1 und 0,2 bis 6 Gew.-% $K_2O$ plus $Na_2O$ in einem Mischungsverhältnis von 1:1 bis 10:1. Bevorzugterweise besteht die Porzellanglasur aus 70 bis 80 Gew.-% $SiO_2$, 10 bis 15 Gew.-% $Al_2O_3$, 6 bis 13 Gew.-% CaO plus MgO in einem Mischungsverhältnis von 1:5 bis 5:1 und 0,2 bis 3 Gew.-% $K_2O$ plus $Na_2O$ in einem Mischungsverhältnis von 1:1 bis 10:1. Das Sonderporzellan besteht in gebranntem und in ungebranntem Zustand bevorzugt aus 10 bis 50 Gew.-% $SiO_2$, 50 bis 80 Gew.-% $Al_2O_3$, 0,2 bis 6 Gew.-% CaO plus MgO in einem Mischungsverhältnis von 1:5 bis 5:1 und 0,5 bis 6 Gew.-% $K_2O$ plus $Na_2O$ in einem Mischungsverhältnis von 1:1 bis 10:1.

Der genannte Bereich der Zusammensetzung führt in Verbindung mit einem Sinterbrand bei Temperaturen im Bereich von 1400°C bis 1450°C zu einem Korrosionswert < 7 $mg/cm^2$, der nach einem im Rahmen der Ausführungsbeispiele näher beschriebenen Meßverfahren ermittelt wird.

Der Auftrag des Überzuges kann nach verschiedenen Methoden erfolgen.

■ Durch Aufsprühen einer wäßrigen Masse/Glasur-Suspension auf das grüne keramische Bauteil.

■ Durch Aufstreuen von vorgefertigen, vorgesinterten Masse/Glasur-Körnungen auf das bereits dichtgesintert keramische Baute unter Verwendung eines speziellen Haftsystems.

■    Durch Tauchen des rohen oder vorgesinterten keramischen Bauteils in eine Masse/Glasur-Suspension, wobei in diesem Fall der Suspension zusätzlich korrosionsbeständige Partikel mit einem mittleren Teilchendurchmesser $\geq$ 50 $\mu$m wie z.B. Korund oder vorgesinterte Partikel aus Sonderporzellan, vorzugsweise in einer Menge von 10 bis 30 Gew.-%, bezogen auf das Gesamtgewicht der Suspension, zugesetzt werden.

Bei der Auftragung der erfindungsgemäßen Massezusammensetzung nach der erstgenannten Auftragsmethode lassen sich die Parameter Litergewicht und Sprühdruck je nach Bedarf variieren. Das Litergewicht des den erfindungsgemäßen Überzug bildenden Schlickers liegt im Bereich von 1,2 bis 1,8 g/cm$^3$, der Sprühdruck im Bereich von 2 bis 7 bar.

Die Vorfertigung der benötigten Sprühmasse erfolgt erfindungsgemäß indem zunächst die Zusammensetzung für den Überzug in einer Trommelmühle, vorzugsweise in Wasser oder Gemischen aus Wasser plus Alkohol, bei einer Mahldauer von 8 bis 12 Stunden, bevorzugt 10 Stunden, gemahlen wird. Die erreichte Kornfeinheit ist durch den $d_{50}$ Wert, der laseroptisch nach ®Cilas, Granulometer 850 der Firma Alcatel, gemessen werden kann, im Bereich von 2 bis 5 $\mu$m charakterisiert. Danach wird die gemahlene Zusammensetzung durch Sprühen getrocknet. Die weitere Aufbereitung der Sprühmasse in die verarbeitungsfähige Schlickerform aus den Komponenten Massesprühkorn und Wasser wird mittels Löse-Quirl bei 300 bis 500 U/min durchgeführt. Vorzugsweise wird dabei dem Schlicker eine Menge von 0,1 bis 0,15 Gew.-% eines Verflüssigers - z.B. ®Optapix PC67 erhältlich bei Zschimmer und Schwarz, Deutschland - zugesetzt. Das dadurch bei ausreichend niedriger Viskosität erreichbare relativ hohe Feststoffniveau bewirkt beim Sprühvorgang in der gebildeten strukturierten Schicht eine die Korrosionsfestigkeit begünstigende gleichmäßig hohe Partikeldichte.

Erfindungsgemäß wurde überraschend gefunden, daß über den Bereich der bereits genannten erfindungsgemäßen Zusammensetzung für den Überzug hinaus eine zusätzliche Verbesserung der Korrosionsbeständigkeit dann erreicht wird, wenn neben der Verwendung der hochsinteraktiven Tonerde ein Austausch der Alkalibestandteile durch Erdalkalien erfolgt, der vorteilhaft ergänzt werden kann durch die zusätzliche Zugabe von bis zu 20 Gew.-% $ZrSiO_4$, bezogen auf das Gesamtgewicht an keramischem Pulver.

Die Erfindung wird nachfolgend anhand von Ausführungsbeispielen für den Fachmann noch deutlicher beschrieben, ohne daraus aber Beschränkungen auf die konkret dargestellten Ausführungsformen ableiten zu wollen.

Um die Eigenschaft "Korrosionsbeständigkeit" im Rahmen der Ausführungsbeispiele einheitlich bewerten zu können, wurde ein genaues Meßverfahren festgelegt. Das Meßverfahren ist an die DIN 12 851 "Laborporzellan-Anforderungen/Prüfung" angelehnt und erlaubt eine zeitgeraffte Beuteilung der Korrosionsbeständigkeit. Dies ist möglich, weil silikathaltige Werkstoffe gegenüber Laugen besonders korrosionsanfällig sind.

Prüfkörper:      Weitgehend ringförmige ca. 30 mm hohe Abschnitte aus dem Schaftbereich von Handschuhtauchformen.

Prüfschritte:

     i Berechnung der Oberfläche $O_p$ nach geometrischer Vermessung.

     ii Ermittlung des Ausgangsgewichtes $G_0$. Wägegenauigkeit 0,1 mg.

     iii Zur Durchführung des Korrosionstestes werden die Prüfkörper über eine Zeit von 50 h bei Temperaturen von 90 $\pm$ 5 °C in einem verschlossenen System mit wäßriger 5 gew.-%iger NaOH-Lösung behandelt.

     iv Nach der Prüfung: Entfernung lockeren Materials an der Oberfläche mit einer Nylonbürste oder dgl. und anschließende Ultraschallreinigung zuerst in 1n HCl, dann in $H_2O$-dest.

     v Ermittlung des Endgewichtes $G_{50}$.

     vi Berechnung des Korrosionswertes:

$$\frac{G_0 \text{-} G_{50}}{O_P} \left[\frac{mg}{cm^2}\right]$$

Prüfkörper der genannten Art, die aus dem Schaft von Handschuhtauchformen herausgeschnitten werden, haben auf der Innenfläche sowie an den Schnittflächen immer eine unbeschichtete Oberfläche. Der Korrosionswert einer partiell nur auf der äußeren Oberfläche vorhandenen Beschichtung muß in diesem Fall rechnerisch durch Vergleich mit dem Korrosionswert einer allseitig unbeschichteten Oberfläche ermittelt werden.

Nach der genannten Methode ergibt sich für ein besonders korrosionsfestes Sonderporzellan ein Korrosionswert von ca. 4 mg/cm$^2$ (Vergleichsbeispiel 3). Für ein weniger korrosionsfestes Normalporzellan ergibt sich ein Korrosionswert von > 20 mg/cm$^2$ (Vergleichsbeispiele 1 und 2).

Bei einem Korrosionswert von 20 mg/cm$^2$ beträgt die mittlere Abtragstiefe schon 80 $\mu$m. Bei einem derart großen Abtrag ist davon auszugehen, daß die aus dem Abtrag resultierende Oberflächentopographie nicht mehr der Ausgangstopographie ähnlich ist.

Als Stand der Technik bezüglich Korrosionsfestigkeit seien zunächst die nachfolgenden Vergleichsbeispiele angeführt:

**Vergleichsbeispiel 1:**

Ein gesintertes Porzellanbauteil mit einer chemischen Zusammensetzung von:
70 % SiO$_2$,
24 % Al$_2$O$_3$,
0,4 % CaO + MgO und
4,4 % K$_2$O + Na$_2$O
wurde nach dem Sinterbrand ohne irgendeine zusätzliche Behandlung dem Korrosionstest unterworfen. Das Bauteil hatte einen Korrosionswert von 23,7 mg/cm$^2$.

**Vergleichsbeispiel 2:**

Das Bauteil aus Vergleichsbeispiel 1 wurde nach dem Sinterbrand einer groben Sandstrahlbehandlung unterworfen und dann dem Korrosionstest unterzogen. Das Baute nach Vergleichsbeispiel 2 ergab einen Korrosionswert von 28,2 mg/cm$^2$.

**Vergleichsbeispiel 3:**

Ein gesintertes Porzellanbauteil aus einem Sonderporzellan mit besonders hoher Korrosionsbeständigkeit mit einer chemischen Zusammensetzung von:
45 Gew.-% SiO$_2$,
50 Gew.-% Al$_2$O$_3$,
0,5 Gew.-% CaO + MgO und
5 Gew.-% K$_2$O + Na$_2$O
wurde nach dem Sinterbrand ohne irgendeine zusätzliche Behandlung dem Korrosionstest unterworfen. Das Bauteil hatte einen Korrosionswert von 4 mg/cm$^2$.

**Vergleichsbeispiel 4:** (Beschichtung)

Ein wasserhaltiger Schlicker bestehend aus:

|  | Chem. Zusammensetzung |
|---|---|
| 75 % Porzellanmasse | 70 % SiO$_2$, 24 % Al$_2$O$_3$, 0,4 % CaO + MgO und 4,4 % K$_2$O + Na$_2$O plus |
| 25 % Porzellanglasur | 75 % SiO$_2$, 13 % Al$_2$O$_3$, 8 % CaO + MgO und 2 % K$_2$O + Na$_2$O |

wurde bei einem Litergewicht von 1,5 [g/cm$^3$] und einem Sprühdruck von 5 bar durch eine 2 mm Düse auf eine rohe Porzellantauchform nach Vergleichsbeispiel 3 aufgesprüht, danach wurde gesintert.

Der Korrosionstest zeigte folgendes Ergebnis:

Der Korrosionswert betrug 7 mg/cm$^2$.

**Beispiele 1 bis 3:**

Eine Zusammensetzung aus 60 Gew.-% Porzellanglasur, 15 Gew.-% Sonderporzellan ungebrannt, 10 Gew.-% Sonderporzellan gebrannt bei 1400 °C und 15 Gew.-% calcinierter Tonerde wurde gemischt und über eine Zeit von 10 h in einer Trommelmühle in Anwesenheit von Wasser als Dispergiermedium gemahlen. Die Porzellanglasur hatte eine Zusammensetzung von:

75 Gew.-% SiO$_2$,

13 Gew.-% Al$_2$O$_3$,

8 Gew.-% CaO + MgO im Mischungsverhältnis 1:1 und

2 Gew.-% K$_2$O + Na$_2$O im Mischungsverhältnis 3:1.

Die Sonderporzellanmasse hatte eine Zusammensetzung von:

45 Gew.-% SiO$_2$,

50 Gew.-% Al$_2$O$_3$,

0,5 Gew.-% CaO + MgO im Mischungsverhältnis 1:1 und

5 Gew.-% K$_2$O + Na$_2$O im Mischungsverhältnis 3:1.

Die calcinierte Tonerde hatte eine spezifische Oberfläche von 9,5 m$^2$/g und bestand zu 99,7 Gew.-% aus Al$_2$O$_3$.

Nach dem Mahlen hatte die Zusammensetzung eine Kornfeinheit $d_{50}$ von 4,4 μm und wurde durch Sprühen getrocknet. Die Weiterverarbeitung und die Meßergebnisse ergeben sich aus der im Anschluß an Beispiel 4 aufgeführten Tabelle 1.

**Beispiel 4:**

Eine Zusammensetzung aus 70 Gew.-% Porzellanglasur, 0 Gew.-% Sonderporzellanmasse, 15 Gew.-% calcinierter Tonerde und 15 Gew.-% ZrSiO$_4$ wurde wie in Beispiel 1 angegeben gemischt und gemahlen.

Die Porzellanglasur hatte eine Zusammensetzung von:

75 Gew.-% SiO$_2$

12 Gew.-% Al$_2$O$_3$

11 Gew.-% CaO + MgO im Mischungsverhältnis 1:1 und

0,3 Gew.-% K$_2$O + Na$_2$O im Mischungsverhältnis 3:1.

Die calcinierte Tonerde hatte dieselben Eigenschaften wie in Beispiel 1. Nach dem Mahlen wurde eine Kornfeinheit $d_{50}$ von 4,2 μm erreicht und die Zusammensetzung wurde durch Sprühen getrocknet.

Die getrockneten Pulver der Beispiele 1 bis 4 wurden wie in der Tabelle 1 angegeben zu Schlickern verarbeitet, auf Handschuhtauchformen aus Sonderporzellan nach der Sprühmethode aufgebracht und bei 1420 °C gesintert. Aus den beschichteten Handschuhtauchformen wurden dann die Prüfkörper für die Bestimmung des Korrosionswertes entnommen.

Tabelle 1

| Oberflächenstruktur | | B 1 Fein | B 2 Mittel | B 3 Grob | B 4 Mittel |
|---|---|---|---|---|---|
| Sprühmasse | [%] | 44,9 | 51,3 | 55,9 | 55,4 |
| Wasser | [%] | 55,1 | 48,7 | 44,1 | 44,6 |
| | $\Sigma$[%] | 100 | 100 | 100 | 100 |
| Litergewicht | [g/cm$^3$] | 1,41 | 1,49 | 1,56 | 1,58 |
| Sprühdruck | [bar] | 6,8 | 6,2 | 3,7 | 6,0 |
| Korrosionswert* | [mg/cm$^2$] | 3,4 | 3,1 | 3,1 | 2,7 |

* Als Bewertungsgröße für die bei den Beispielen 1 bis 4 erreichten Korrosionswerte kann der Wert von 7 mg/cm$^2$, der für Oberflächenbeschichtungen von silikathaltiger Keramik nach dem Stand der Technik die Obergrenze der Korrosionsfestigkeit bildet (siehe Vergleichsbeispiel 4), beziehungsweise von 4 mg/cm$^2$ für besonders korrosionsfestes unbeschichtetes Sonderporzellan (siehe Vergleichsbeispiel 3) angesehen werden.

**Beispiel 5:**

Einer Zusammensetzung aus 58,5 Gew.-% Porzellanglasur, 14 Gew.-% Sonderporzellan ungebrannt, 9 Gew.-% Sonderporzellan gebrannt bei 1400 °C und 14 Gew.-% calcinierter Tonerde mit jeweiligen chemischen Zusammensetzungen wie in Beispiel 1 wurden zusätzlich 3,75 Gew.-% schwarzer Farbkörper der Firma Degussa (Artikel Nr. 24 154) plus 0,75 Gew.-% Kobaltoxid zugesetzt. Dann wurde gemischt und über eine Zeit von 10 h in einer Trommelmühle in Anwesenheit von Wasser als Dispergiermedium gemahlen. Dann wurde daraus ein Schlicker aus 51 Gew.-% Sprühmasse und 49 Gew.-% Wasser hergestellt, der ein Litergewicht von 1,52 g/cm$^3$ besaß. Dieser Schlicker wurde mit einem Sprühdruck von 6,5 bar auf eine Handschuhtauchform wie in Beispiel 1 aufgebracht. Der Korrosionstest ergab einen Korrosionswert von 2,5 mg/cm$^2$.

Definierte, reproduzierbar herstellbar Oberflächenstrukturen hoher Korrosionsfestigkeit lassen sich nach weiteren im folgenden beschriebenen erfindungsgemäßen Anwendungsbeispielen produzieren:

**Beispiel 6:**

Eine Zusammensetzung aus 85 Gew.-% Porzellanglasur wie in Beispiel 1 angegeben sowie 15 Gew.-% der ebenfalls in Beispiel 1 genannten hochsinteraktiven calcinierten Tonerde wurde über eine Zeit von 10 h gemahlen und anschließend durch Sprühen getrocknet. Aus dem Sprühgetrockneten Granulat wurde mit Wasser eine Sprühdispersion mit einem Litergewicht von 1,3 g/cm$^3$ hergestellt und unter einem Sprühdruck von 4 bar auf eine Handschuhtauchform aus Sonderporzellan aufgesprüht. Mit diesem Überzug wurde eine Oberfläche mit weicherem Wellenprofil und gleichzeitig ein Korrosionswert von 2,7 mg/cm$^2$ erreicht. Die geringe Oberflächenwelligkeit erleichtert die Reinigung der Handschuhform-Oberfläche erheblich.

**Beispiele 7 und 8:**

Eine besonders interessante Form der Strukturierung der hoch korrosionsfesten Oberfläche wird erreicht, wenn im Streuverfahren folgender Bereich der Zusammensetzung gewählt wird:

60 bis 90 Gew.-%  Porzellanglasur wie in Beispiel 1 / alternativ Sonderglasur wie in Beispiel 4,
0 bis 40 Gew.-%  korrosionsfeste Sonderporzellanmasse wie in Beispiel 1,
0 bis 20 Gew.-%  hochsinteraktive calc. Tonerde mit einer spezifischen Oberfläche von 8 bis 10 m$^2$/g oder ein gleichwertiger Al$_2$O$_3$-Rohstoff und
0 bis 20 Gew.-%  Zirkonsilikat.

**Beispiel 7:**

Eine Zusammensetzung aus 70 Gew.-% Porzellanglasur wie in Beispiel 1, 20 Gew.-% korrosionsfeste Sonderporzellanmasse wie in Beispiel 1 und 10 Gew.-% hochsinteraktive calcinierte Tonerde wie in Beispiel 1 wird wie in Beispiel 1 gemahlen und sprühgetrocknet.

**Beispiel 8:**

Die Zusammensetzung nach Beispiel 8 enthielt 75 Gew.-% Porzellanglasur wie in Beispiel 1, 15 Gew.-% Sonderporzellan mit

10 Gew.-% $SiO_2$

85 Gew.-% $Al_2O_3$

5 Gew.-% CaO + MgO im Mischungsverhältnis 1:1,

0,2 Gew.-% $K_2O$ + $Na_2O$ im Mischungsverhältnis 3:1 und

10 Gew.-% hochsinteraktive calcinierte Tonerde.

Die Zusammensetzungen von Beispiel 7 und Beispiel 8 wurden bereits im Rohzustand im Wirbelmischer unter Zusatz von 15 bis 17 Gew.-% einer 15-%igen wäßrigen Lösung von Polyvinylalkohol granuliert.

Das Granulatgemenge wurde je nach angestrebter Wellentiefe und Wellenlänge der Oberflächenstruktur in unterschiedliche Fraktionen z.B.

0,1 - 0,2 mm

0,1 - 0,3 mm

0,3 - 0,5 mm

getrennt, bei 1050 °C vorgesintert und auf die bereits bei 1400 bis 1450 °C vorgebrannte Handschuhtauchform aufgestreut. Deren Oberfläche wurde zuvor mit einer aufgesprühten Haftschicht aus:

28 Gew.-% Klebemittel auf Harzbasis,

45 Gew.-% Terpentinöl als Lösemittel für das Harz und

27 Gew.-% Prozellanglasur wie in Beispiel 1 präpariert. Die Haftschicht bewirkt sowohl ein Haften der Granulatschicht vor als auch nach dem nochmaligen Brand bei Temperaturen im Bereich von 1400 bis 1450 °C.

Mit dieser besonderen Oberflächenstrukturierung wird nach Beispiel 7 ein Korrosionswert von 3,2 mg/cm$^2$ und nach Beispiel 8 von 4,0 mg/cm$^2$ erreicht.

**Beispiel 9:**

Neben unglasierten, glasierten, sandgestrahlten und sprühbeschichteten Handschuhtauchform-Oberflächen werden auch solche benötigt, die speziell im Handflächen- und Fingerbereich streng geometrisch geformte Reliefs aufweisen.

Auf diese bereits vorgegebenen gemusterten Oberflächen lassen sich nun erfindungsgemäß korrosionsbeständige Sprühschichten gemäß den Anwendungsbeispielen 1 bis 8 aufbringen und einsintern. Dadurch wird einerseits eine zusätzliche Strukturierung der geometrischen Grundreliefs erreicht, andererseits aber auch eine Verbesserung der Korrosionsbeständigkeit gegenüber dem unbeschichteten Sonderporzellan.

**Patentansprüche**

1. Keramisches Bauteil, das an seiner äußeren Oberfläche einen korrosionsbeständigen variabel strukturierten keramischen Überzug trägt, dadurch gekennzeichnet, daß der Überzug 40 bis 95 Gew.-% Porzellanglasur, 5 bis 30 Gew.-% hochsinteraktive calcinierte Tonerde, 0 bis 35 Gew.-% ungebranntes Sonderporzellan und 0 bis 25 Gew.-% gebranntes Sonderporzellan enthält.

2. Bauteil nach Anspruch 1, dadurch gekennzeichnet, daß die Porzellanglasur aus 65 bis 85 Gew.-% $SiO_2$, 10 bis 20 Gew.-% $Al_2O_3$, 5 bis 15 Gew.-% CaO plus MgO in einem Mischungsverhältnis von 1:5 bis 5:1 und 0,1 bis 5 Gew.-% $K_2O$ plus $Na_2O$ in einem Mischungsverhältnis von 1:1 bis 10:1 besteht.

3. Bauteil nach Anspruch 1, dadurch gekennzeichnet, daß die hochsinteraktive Tonerde aus calcinierter Tonerde mit einer spezifischen Oberfläche im Bereich von 8 bis 10 m$^2$/g und einem Anteil von $\cong$ 99,5 Gew.-% an $Al_2O_3$ besteht, aus Aluminiumhydroxid oder aus Aluminiumoxidhydrat gleich hoher Reinheit und gleichgroßer Sinteraktivität.

4. Baute nach Anspruch 1, dadurch gekennzeichnet, daß das Sonderporzellan in gebranntem und in ungebranntem Zustand aus 5 bis 50 Gew.-% $SiO_2$, 45 bis 90 Gew.-% $Al_2O_3$, 0,1 bis 6 Gew.-% CaO plus MgO in einem Mischungsverhältnis von 1:5 bis 5:1 und 0,2 bis 6 Gew.-% $K_2O$ plus $Na_2O$ in einem Mischungsverhältnis von 1:1 bis 10:1 besteht.

5. Bauteil nach einem der Ansprüche 1 bis 4, dadurch gekennzeichnet, daß es nach fünfzigstündiger Einwirkung einer 5 %-igen NaOH-Lösung bei einer Temperatur von 90 bis 95 °C einen Gewichtsverlust von $\leq$ 7 mg/cm$^2$ Oberfläche besitzt, vorzugsweise von $\leq$ 4 mg/cm$^2$.

6. Bauteil nach einem der Ansprüche 1 bis 5, dadurch gekennzeichnet, daß der Überzug zusätzlich bis zu 20 Gew.-% $ZrSiO_4$, bezogen auf das Gesamtgewicht an keramischem Pulver im Überzug, enthält.

7. Bauteil nach einem der Ansprüche 1 bis 6, dadurch gekennzeichnet, daß der Überzug zusätzlich 3 bis 8 Gew.-% oxidische Farbkörper enthält, die bis zu einer Temperatur von wenigstens 1450 °C farbbeständig sind.

8. Verfahren zum Herstellen eines keramischen Bauteils nach einem der Ansprüche 1 bis 7, bei dem der Überzug in Form eines Schlickers auf das zuvor geformte Bauteil aufgetragen wird, dadurch gekennzeichnet, daß die Pulverzusammensetzung für den Überzug zunächst gemahlen, dann durch Sprühen getrocknet, dann in einen wäßrigen Schlicker überführt und danach durch Aufsprühen des wäßrigen Schlickers mit einem Litergewicht im Bereich von 1,2 bis 1,8 g/cm$^3$, bei einem Sprühdruck im Bereich von 2 bis 7 bar auf das grüne keramische Bauteil aufgebracht wird.

9. Verfahren nach Anspruch 8, dadurch gekennzeichnet, daß dem Schlicker zusätzlich 0,1 bis 0,15 Gew.-%, bezogen auf das Gewicht des Feststoffanteils, eines Verflüssigers zugesetzt werden.

10. Verfahren zum Herstellen eines keramischen Bauteils nach einem der Ansprüche 1 bis 7, dadurch gekennzeichnet, daß der Überzug durch Aufstreuen von vorgefertigen, vorgesinterten Masse/Glasur-Körnungen auf das bereits dichtgesinterte keramische Bauteil unter Verwendung eines Haftklebers aufgetragen und dann gesintert wird.

11. Verwendung eines Bauteils nach einem der Ansprüche 1 bis 7 als Griff für chemisch technische Zwecke oder für Kochgeschirr oder als Tauchform zur Herstellung von dünnwandigen Gummierzeugnissen durch Eintauchen der Tauchform in einen flüssigen Latex.

**Claims**

1. A ceramic component which bears on its outer surface a corrosion-resistant, variably structured ceramic coating, wherein the coating comprises from 40 to 95% by weight of porcelain glaze, from 5 to 30% by weight of highly sinteractive calcined alumina, from 0 to 35% by weight of unfired special porcelain and from 0 to 25% by weight of fired special porcelain.

2. A component as claimed in claim 1, wherein the porcelain glaze comprises from 65 to 85% by weight of $SiO_2$, from 10 to 20% by weight of $Al_2O_3$, from 5 to 15% by weight of CaO plus MgO in a mixing ratio of from 1:5 to 5:1 and from 0.1 to 5% by weight of $K_2O$ plus $Na_2O$ in a mixing ratio of from 1:1 to 10:1.

3. A component as claimed in claim 1, wherein the highly sinteractive alumina comprises calcined alumina having a specific surface area in the range from 8 to 10 m$^2$/g and a proportion of $\geq$ 99.5% by weight of $Al_2O_3$, or aluminum hydroxide or aluminumoxidehydrate of equally high purity and equally high sinteractivity.

4. A component as claimed in claim 1, wherein the special porcelain in the fired and in the unfired state comprises from 5 to 50% by weight of $SiO_2$, from 45 to 90% by weight of $Al_2O_3$, from 0.1 to 6% by weight of CaO plus MgO in a mixing ratio of from 1:5 to 5:1 and from 0.2 to 6% by weight of $K_2O$ plus $Na_2O$ in a mixing ratio of from 1:1 to 10:1.

5. A component as claimed in any one of claims 1 to 4, which, after the action of a 5% strength NaOH solution for five hours at a temperature of from 90 to 95°C, has a weight loss of $\leq$ 7 mg/cm$^2$ of surface, preferably $\leq$ 4 mg/cm$^2$.

6. A component as claimed in any one of claims 1 to 5, wherein the coating additionally comprises up to 20% by weight of $ZrSiO_4$, based on the total weight of ceramic powder in the coating.

7. A component as claimed in any one of claims 1 to 6, wherein the coating additionally comprises from 3 to 8% by weight of oxidic pigments which are color-stable up to a temperature of at least 1450°C.

**8.** A process for producing a ceramic component as claimed in any one of claims 1 to 7, in which the coating is applied in the form of a slip to the previously shaped component, which comprises first milling the powder composition for the coating, then spray drying it, then converting it into an aqueous slip and then applying it to the green ceramic component by spraying on the aqueous slip having a density in the range from 1.2 to 1.8 g/cm$^3$ at a spraying pressure in the range from 2 to 7 bar.

**9.** The process as claimed in claim 8, wherein an additional 0.1 to 0.15% by weight, based on the weight of solids, of a fluidizer is added to the slip.

**10.** A process for producing a ceramic component as claimed in any one of claims 1 to 7, which comprises applying the coating by sprinkling prepared, presintered body/glaze grains onto the ceramic component, previously sintered to full density, using an adhesive, and then sintering.

**11.** Use of a component as claimed in any one of claims 1 to 7 as a handle for technical chemical purposes or for cooking utensils or as dipping pattern for the production of thin-walled rubber products by dipping the dipping pattern into a liquid latex.

## Revendications

**1.** Elément préfabriqué céramique qui porte sur sa surface extérieure un revêtement céramique à structure variable résistant à la corrosion, caractérisé en ce que le revêtement contient de 40 à 95 % en poids de glaçure de porcelaine, de 5 à 30 % en poids d'alumine calcinée hautement activée à fritter de 0 à 35 % en poids de porcelaine spéciale non cuite et de 0 à 25 % en poids de porcelaine spéciale cuite.

**2.** Elément préfabriqué selon la revendication 1, caractérisé en ce que la glaçure de porcelaine se compose de 65 à 85 % en poids de $SiO_2$, de 10 à 20 % en poids d'$Al_2O_3$, de 5 à 15 % en poids de CaO plus MgO dans un rapport de mélange de 1:5 à 5:1 et de 0,1 à 5 % en poids de $K_2O$ plus $Na_2O$ dans un rapport de mélange de 1:1 à 10:1.

**3.** Elément préfabriqué selon la revendication 1, caractérisé en ce que l'alumine activée à fritter se compose d'alumine calcinée ayant une surface spécifique dans l'intervalle de 8 à 10 m$^2$/g et d'une portion de $\cong$ 99,5 % en poids en $Al_2O_3$, d'hydroxyde d'aluminium ou d'oxyde d'aluminium hydraté d'une pureté identique élevée et d'une activité au frittage de la même grandeur.

**4.** Elément préfabriqué selon la revendication 1, caractérisé en ce que la porcelaine spéciale à l'état cuit et à l'état non cuit se compose de 5 à 50 % en poids de $SiO_2$, de 45 à 90 % en poids d'$Al_2O_3$, de 0,1 à 6 % en poids de CaO plus MgO dans un rapport de mélange de 1:5 à 5:1 et de 0,2 à 6 % en poids de $K_2O$ plus $Na_2O$ dans un rapport de mélange de 1:1 à 10:1.

**5.** Elément préfabriqué selon les revendications 1 à 4, caractérisé en ce qu'après un temps d'action de 50 heures d'une solution de NaOH à 5 %, à une température de 90 à 95 °C, il a une perte de poids de $\leqq$ 7 mg/cm$^2$ de la surface, de préférence de $\leqq$ 4 mg/cm$^2$.

**6.** Elément préfabriqué selon les revendications 1 à 5, caractérisé en ce que le revêtement contient de plus jusqu'à 20 % en poids de $ZrSiO_4$ par rapport au poids total de la poudre céramique dans le revêtement.

**7.** Elément préfabriqué selon les revendications 1 à 6, caractérisé en ce que le revêtement contient de plus de 3 à 8 % en poids de colorant oxydé ayant une couleur stable jusqu'à une température d'au moins 1450 °C.

**8.** Procédé pour préparer un élément préfabriqué céramique selon l'une des revendications 1 à 7, dans lequel le revêtement sous forme d'une bouillie est appliqué à l'élément préfabriqué façonné, caractérisé en ce que la composition pulvérulente pour le revêtement est d'abord broyée puis séchée par pulvérisation et ensuite transformée en une bouillie aqueuse après quoi appliquée par pulvérisation de la bouillie aqueuse ayant un poids au litre dans l'intervalle de 1,2 à 1,8 g/cm$^3$, sous une pression de pulvérisation dans l'intervalle de 2 à 7 bars sur l'élément préfabriqué céramique à vert.

**9.** Procédé selon la revendication 8, caractérisé en ce que de plus l'on ajoute à la bouillie de 0,1 à 0,15 % en poids d'un fluidifiant par rapport au poids de la portion en matières solides.

**10.** Procédé pour la préparation d'un élément préfabriqué céramique selon l'une des revendications 1 à 7, caractérisé en ce que l'on applique le revêtement par épandage de granulat préparé préalablement, préfritté de la masse/glaçure sur l'élément préfabriqué céramique déjà fritté à haute densité en utilisant une colle de contact et en frittant ensuite.

**11.** Utilisation d'un élément préfabriqué selon l'une des revendications 1 à 7 comme poignet à des fins techniques chimiques ou pour des ustensiles de cuisine ou comme formes à tremper pour la préparation d'articles en caoutchouc à parois minces par immersion de la forme à tremper dans un latex liquide.